# EUROPÄISCHE PATENTSCHRIFT

(11) **EP 3 017 086 B1**
(45) Veröffentlichungstag und Bekanntmachung des Hinweises auf die Patenterteilung: **05.06.2019**
(21) Anmeldenummer: 14739698.0
(22) Anmeldetag: 18.06.2014
(51) Int. Cl.: C23F 13/10, C23F 13/18, C23F 13/22, F04D 7/06, F04D 29/42, F16L 23/00

(54) **FLUIDFÜHRENDES SYSTEM MIT KATHODISCHEM KORROSIONSSCHUTZ**
FLUID-CONDUCTING SYSTEM WITH CATHODIC CORROSION PROTECTION
SYSTÈME DE GUIDAGE DE FLUIDE POURVU D'UNE PROTECTION CONTRE LA CORROSION CATHODIQUE

(30) Priorität: 28.06.2013 DE 102013212725
(43) Veröffentlichungstag der Anmeldung: 11.05.2016
(73) Patentinhaber: KSB SE & Co. KGaA, 67227 Frankenthal (DE)
(72) Erfinder: BÖHM, Alexander, 67227 Frankenthal (DE); KÖFLER, Karl-Heinz, 67227 Frankenthal (DE); PÜTTERICH, Alexander, 67227 Frankenthal (DE); SCHRAMM, Bernd, 67227 Frankenthal (DE); LINDELL, Björn, SE-260 21 Billeberga (SE)
(86) Internationale Anmeldenummer: PCT/EP2014/062857
(87) Internationale Veröffentlichungsnummer: WO 2014/206839

(56) Entgegenhaltungen:
- DE-A1- 4 238 751
- DE-B- 1 253 994
- US-A- 4 713 158
- US-A1- 2002 179 429
- US-A1- 2004 031 697

## Beschreibung

Die Erfindung betrifft ein Fluidführendes System mit kathodischem Korrosionsschutz mit wenigstens einer Pumpe und/oder Armatur mit wenigstens einer Anschlussvorrichtung und mit wenigstens einem Rohrelement mit Anschlussmittel.

Derartige fluidführende Systeme mit Pumpen oder Armaturen sind weit verbreitet und werden oftmals zum Fördern und Beeinflussen korrosiver Fluide oder Medien eingesetzt, wodurch die dem Fluid oder Medium ausgesetzten Innenwände Schaden nehmen und nach einer bestimmten Zeit Teile des Systems bzw. der Vorrichtungen ersetzt werden müssen.

Um Pumpen oder Armaturen gegen Korrosion zu schützen, ist beispielsweise aus der KR 100540390 B1 bekannt, einen das Gehäuse einer Armatur mit einem Wasserrohr verbindenden Bolzen an eine Opferanode anzuschließen.

Ferner sind Pumpen bekannt, die im Inneren des Gehäuses angeordnete Opferanoden aufweisen. Beispiele hierfür sind die JP 2002295389 A, JP 2002295390 A oder JP 2002242874 A.

Der Nachteil bei beiden Varianten liegt darin begründet, dass immer wiederkehrende Wartungsarbeiten vorzunehmen sind und, insbesondere bei innenliegenden Opferanoden, die gesamte Anlage ausgeschaltet werden muss.

Aus der DE 7603732 U ist ein Wasserbehälter bekannt, in dessen unterem Bereich ein elektrisches Heizelement angeordnet ist. An der Innenwand des Behälters ist eine passive Korrosionsschutzschicht aus Emaille ausgebildet. Ferner sind einen kathodischen Korrosionsschutz bewirkende fremdstrombeaufschlagte Elektroden vorgesehen, wobei die Elektroden mittels eines Potentiostaten und einer Bezugselektrode auf ein optimales Potential einsteuerbar sind und mindestens eine Fremdstromanode in der Nähe des Heizelementes angeordnet ist. Eine derartige Anordnung erweist sich jedoch für Anlagen mit einer relativ hohen Strömung als ungeeignet.

Bei der DE 42 38 751 A1 sind zum Korrosionsschutz von unter Bildung von Spalten zusammenstoßenden Oberflächen metallischer Bauteile gegenüber ionenleitenden flüssigen Korrosionsmedien in den Spalten gegenüber den Metalloberflächen elektrisch isolierte Anoden angeordnet. Zur Verbesserung des Korrosionsschutzes ist vorgesehen, die mit den als Kathode geschalteten Bauteilen verbundene Anode in einen eine offene Porosität aufweisenden, elektrisch isolierend wirkenden Festkörper einzubetten.

Die DE 1 253 994 A offenbart eine Anodenanordnung zum kathodischen Korrosionsschutz von Kreiselpumpen unter Verwendung fremdstromgespeister Anoden wobei die Anoden an einer oder an beiden Stirnseiten des Pumpengehäuses im Bereich des Laufrades zur Erzielung einer möglichst gleichmäßigen Stromverteilung über die Innenflächen der Pumpe angeordnet sind.

Die US 2004/0031697 A1 beschreibt ein Verfahren zum Reduzieren von Belägen auf Metalloberflächen, die einer wässrigen Lösung ausgesetzt sind.

Aus der US 4,713,158 A ist ein System zum kathodischen Schützen einer in einem Elektrolyt angeordneten Struktur bekannt.

Die US 2002/0179429 A1 beschreibt Anoden für den Einsatz in Tauchpumpen, Propeller und dergleichen.

Die Aufgabe der Erfindung besteht darin, ein fluidführendes System bzw. eine Förderstrom fördernde oder beeinflussende Vorrichtung mit einem kathodischen Korrosionsschutzsystem zu versehen, bei dem die vorstehend genannten Nachteile überwunden werden und dabei der Förderstrom in der Vorrichtung oder einem daran angeschlossenen Rohrsystem nicht gestört wird.

Die Aufgabe wird erfindungsgemäß dadurch gelöst, dass das fluidführendes System ringförmige Anoden umfasst, wobei zwischen einer ersten und einer zweiten Anschlussvorrichtung und/oder zwischen einer ersten Anschlussvorrichtung und einem Anschlussmittel und/oder zwischen einer zweiten Anschlussvorrichtung und einem Anschlussmittel jeweils eine Anode angeordnet ist, die Anoden mittels einen oder mehrere Leiter aufweisenden Leitungen mit einer Überwachungseinrichtung elektrisch verbunden sind und der Innendurchmesser der Anoden gleich dem Innendurchmesser des an der jeweiligen Anode angeordneten Rohrelements ist.

Der Erfindung weiter folgend, entspricht bei einer weiteren Ausgestaltung der Innendurchmesser der Anoden dem Innendurchmesser der der jeweiligen Anode zugeordneten Ein- oder Ausströmöffnung Pumpe oder Armatur. Dadurch werden Turbulenzen und/oder Strömungswirbel im fluidführenden System verhindert.

In weiterer Ausgestaltung sind in dem Gehäuse eine oder mehrere Gewindebohrungen vorgesehen, in welche mit dem Gehäuse elektrisch leitend verbundene Referenzelektroden eingeschraubt sind. Dadurch ist es möglich, die Referenzelektroden mit dem Fluid bzw. dem Förderstrom im Inneren des Gehäuses in Kontakt zu bringen, ohne dass diese in das Innere des Gehäuses hineinragen oder einen Totraum, d. h. eine sacklochartige Vertiefung, bilden. Gleichzeitig lässt sich diese Öffnung im Gehäuse gut abdichten.

Dass die Referenzelektroden derart zueinander angeordnet sind, dass die größtmögliche Innenfläche des Gehäuses hinsichtlich des Potentials abgleichbar ist, ermöglicht ein betriebssicheres betreiben der Anlage. Eine Zustandsüberwachung aller durch ein Medium oder Fluid berührte Oberflächen innerhalb des Gehäuses wird somit zuverlässig gewährleistet.

Nach einer weiteren Ausgestaltung ist zur Optimierung des Betriebs vorgesehen, dass die Überwachungseinrichtung eine Steuer- oder Regeleinheit, einen ersten Gleichrichter, einen zweiten Gleichrichter und ein Messmodul aufweist.

Erfindungsgemäß wird vorgeschlagen, dass eine ringförmige und elektrisch isolierend wirkende erste Isolierschiebe zwischen der Anode und der ersten bzw. der zweiten Anschlussvorrichtung sowie eine elektrisch isolierend wirkende zweite Isolierschiebe zwischen der Anode und dem Anschlussmittel angeordnet ist. Dadurch ist es möglich variierende Abstände zwischen dem Gehäuse der Pumpe oder der Armatur mit Isolierscheiben unterschiedlicher Stärke oder durch die Verwendung mehrerer Isolierscheiben auszugleichen.

Um einen sicheren Isolierungsschutz zu gewährleisten sind erfindungsgemäß in der ersten bzw. zweiten Anschlussvorrichtung und in der Anschlussvorrichtung der Rohrelemente Bohrungen vorgesehen, in welche elektrisch isolierend wirkende Isolierhülsen angeordnet sind. Diese werden für eine einfache Montage vorzugsweise in die Bohrungen eingeschoben.

Zur Erhöhung des Isolierungsschutzes weisen die Isolierhülsen an ihrem freien Ende einen Kragen auf.

Ausführungsbeispiele der Erfindung sind in der Zeichnung dargestellt und werden im Folgenden näher beschrieben. Es zeigt
- Fig. 1: die Seitenansicht einer an ein Rohrsystem angeschlossenen und mit einer Steuer- und Überwachungsvorrichtung verbundenen, horizontal geteilten Spiralgehäusepumpe,
- Fig. 2: die Prinzipskizze einer Überwachungseinrichtung,
- Fig. 3: eine an ein Rohrsystem angeschlossenen Armatur im Schnitt und
- Fig. 4: die Detailansicht des Anschlussbereichs der Spiralgehäusepumpe und des Rohrsystems im Schnitt.

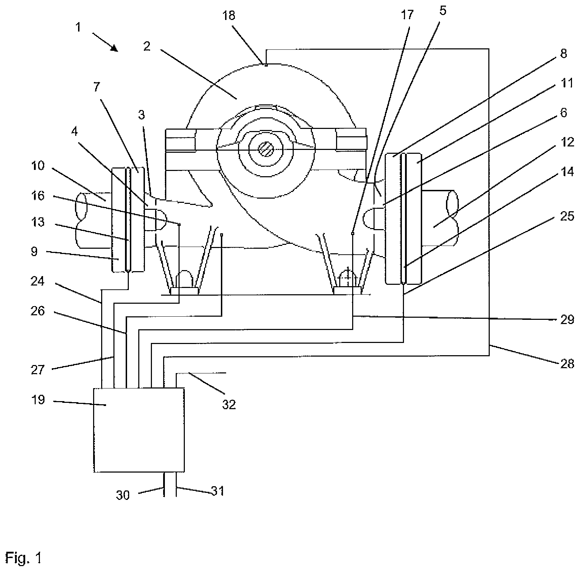

In der Fig. 1 ist eine Förderstrom fördernde Vorrichtung 1 in Form einer horizontal geteilten Spiralgehäusepumpe für ein fluidführendes System dargestellt, wobei die Förderstrom fördernde Vorrichtung oder Pumpe 1 ein Gehäuse 2 mit einem Einlassstutzen 3 und einer Einströmöffnung 4 und einen Auslassstutzen 5 mit einer Ausströmöffnung 6 aufweist. An der Einströmöffnung 4 ist eine erste Anschlussvorrichtung 7 und an der Ausströmöffnung 6 eine zweite Anschlussvorrichtung 8, jeweils in Form eines Flansches ausgebildet. Während die erste Anschlussvorrichtung 7 an ein Anschlussmittel 9, beispielsweise ein Anschlussflansch, eines Rohrelements 10 angeschlossen ist, ist die zweite Anschlussvorrichtung 8 der Förderstrom fördernden Vorrichtung 1 an eine Anschlussvorrichtung 11 eines Rohrelements 12 angeschlossen.

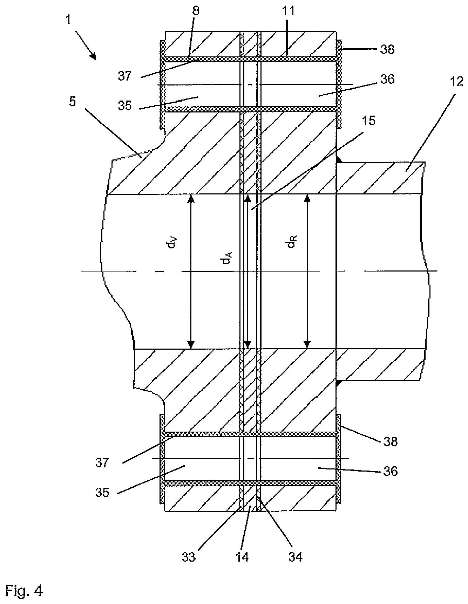

Zwischen der ersten Anschlussvorrichtung 7 der Förderstrom fördernden Vorrichtung 1 und dem Anschlussmittel 9 des Rohrelements 10 ist eine gegenüber der Anschlussvorrichtung 7 und dem Anschlussmittel 9 isolierte und ringförmig ausgebildete als Fremdstromanode ausgeführte erste Anode 13 angeordnet. Zwischen der zweiten Anschlussvorrichtung 8 der Förderstrom fördernden Vorrichtung 1 und dem Anschlussmittel 11 des Rohrelements 12 ist eine gegenüber den Anschlussvorrichtungen 8 und dem Anschlussmittel 11 isolierte und ringförmig ausgebildete als Fremdstromanode ausgeführte zweite Anode 14 angeordnet. Der Innendurchmesser d_{A} der Anoden 13 und 14 entspricht, wie detailliert in Fig. 4 gezeigt, dem Innendurchmesser d_{R} der den Anoden 13 und 14 zugeordneten Rohrelemente 10 bzw. 12 sowie den Innendurchmessern dv der an den Anoden 13 und 14 angeordneten Ein- oder Ausströmöffnung der Förderstrom fördernden Vorrichtung 1. Damit ragen die Anoden 13 und 14 nicht in den Strömungsweg des Förderstroms und bilden auch keine sogenannten Toträume, d. h. Vertiefungen, beispielsweise ringnutartige Vertiefungen, in der Verwirbelungen auftreten können. Die im Wesentlichen aus einer Titanlegierung hergestellten Anoden 13 und 14 sind an dem das Fluid bzw. den Förderstrom berührenden Bereich mit einem Substrat 15, wie in der Fig. 4 dargestellt, aus einer Mischung verschiedener Metalloxide, beispielsweise Iridium, Tantal und/oder Ruthenium beschichtet.

Am Einlassstutzen 3 ist eine nicht dargestellte Gewindebohrung vorgesehen, in die eine erste Referenzelektrode 16 eingeschraubt ist. Der Auslassstutzen 5 weist ebenfalls eine nicht dargestellte Gewindebohrung auf, in die eine zweite Referenzelektrode 17 eingeschraubt ist. Auf der Oberseite des Gehäuses 2 ist eine dritte Referenzelektrode 18 in eine weitere, nicht gezeigte Gewindebohrung eingeschraubt. Erste, zweite und dritte Referenzelektrode sind, mit dem Gehäuse 2 elektrisch leitend verbunden, in die Bohrungen eingeschraubt. Die vorzugsweise aus Reinzink, Silber oder einer Silberlegierung hergestellten Referenzelektroden kommen unmittelbar mit dem Fluid bzw. Förderstrom im Inneren des Gehäuses 2 in Kontakt, ohne in das Gehäuseinnere hineinzuragen oder einen Totraum, d. h. eine sacklochartige Vertiefung, zu bilden. Bei der in der Fig. 1 gezeigten Spiralgehäusepumpe 1 werden vorzugsweise drei Referenzelektroden eingesetzt, bei Bedarf, insbesondere bei anderen Gehäuseformen, kann die Anzahl der Referenzelektroden erhöht oder vermindert werden.

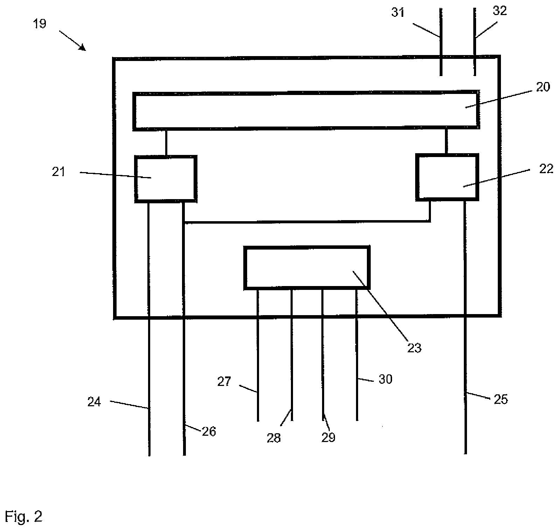

Die Referenzelektroden 16, 17 und 18 sind vorzugsweise so zueinander angeordnet, dass sie die größtmögliche Innenfläche des Gehäuses hinsichtlich des Potentials abgleichen können. In Fig. 1 ist ferner eine Überwachungseinrichtung 19 gezeigt, die beispielsweise in einem Schaltschrank untergebracht ist. Die Überwachungseinrichtung 19 weist eine detaillierter in Fig. 2 gezeigte Steuer- oder Regeleinheit 20, einen ersten Gleichrichter 21, einen zweiten Gleichrichter 22 und ein Messmodul 23 auf. Von dem ersten Gleichrichter 21 führt eine einen oder mehrere Leiter umfassende Leitung 24 zur ersten Anode 13. Der zweite Gleichrichter 22 ist über eine einen oder mehrere Leiter umfassende Leitung 25 mit der zweiten Anode 14 verbunden. Über eine einen oder mehrere Leiter umfassende Leitung 26 ist das Gehäuse 2 sowohl an den ersten Gleichrichter 21 als auch den zweiten Gleichrichter 22 angeschlossen. Das Messmodul 23 ist mit einer einen oder mehrere Leiter aufweisende Leitung 27 an die erste Referenzelektrode 16 angeschlossen und über eine einen oder mehrere Leiter aufweisende Leitung 28 mit der dritten Referenzelektrode 18 verbunden. Eine einen oder mehrere Leiter aufweisende Leitung 29 führt zur zweiten Referenzelektrode 17. Eine einen oder mehrere Leiter aufweisende Leitung 30 ist zu weiteren, nicht dargestellten, externen Ein-/Ausgabevorrichtungen, Mess- und/oder Überwachungseinrichtungen oder Rechnern führbar.

Die Überwachungseinrichtung 19 wird im Übrigen von einer üblichen Wechselspannungsquelle über eine Versorgungsleitung 31 mit elektrischer Energie versorgt. Vorzugsweise ist die Überwachungseinrichtung 19 zudem an eine Alarmsammelleitung 32 angeschlossen.

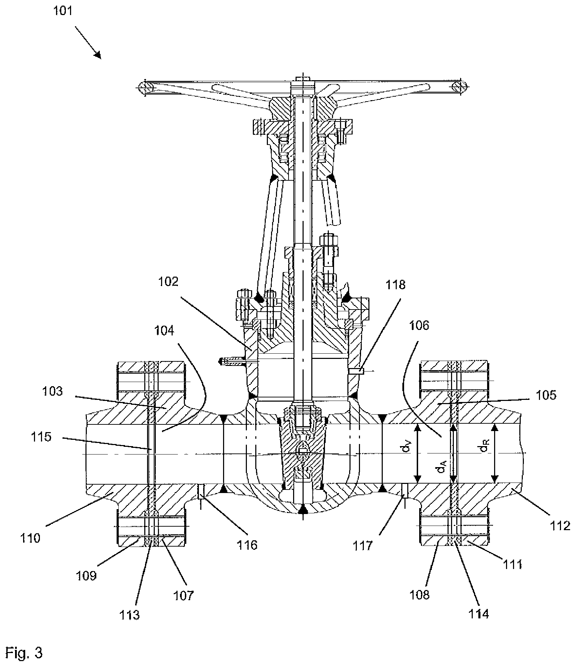

Die Fig. 3 zeigt eine Förderstrom beeinflussende Vorrichtung 101 in Form einer Armatur, insbesondere Sperrschieber, für ein fluidführendes System. Die Förderstrom beeinflussende Vorrichtung oder Armatur 101 weist ein Gehäuse 102 mit einem Einlassstutzen 103 und einer Einströmöffnung 104 und einen Auslassstutzen 105 mit einer Ausströmöffnung 106 auf. An der Einströmöffnung 104 ist eine erste Anschlussvorrichtung 107 und an der Ausströmöffnung 106 eine zweite Anschlussvorrichtung 108, jeweils in Form eines Flansches ausgebildet. Die erste Anschlussvorrichtung 107 ist an ein Anschlussmittel 109 eines Rohrelements 110 und die zweite Anschlussvorrichtung 108 der Förderstrom beeinflussenden Vorrichtung 101 an ein Anschlussmittel 111 eines Rohrelements 112 angeschlossen.

Zwischen der ersten Anschlussvorrichtung 107 der einen Förderstrom beeinflussenden Vorrichtung 101 und dem Anschlussmittel 109 des Rohrelements 110 ist eine gegenüber der Anschlussvorrichtung 107 und dem Anschlussmittel 109 isolierte und ringförmig ausgebildete erste Anode 113 angeordnet. Zwischen der zweiten Anschlussvorrichtung 108 der Armatur 101 und dem Anschlussmittel 111 des Rohrelements 112 ist eine gegenüber der Anschlussvorrichtung 108 und dem Anschlussmittel 111 isolierte und ringförmig ausgebildete zweite Anode 114 angeordnet. Der Innendurchmesser d_{A} der Anoden 113 und 114 entspricht im Wesentlichen dem Innendurchmesser d_{R} der Rohrelemente 110 bzw. 112 und dem Innendurchmesser dv der Ein- bzw. Ausströmöffnung 104 bzw. 106. Der Aufbau der Anoden entspricht dem zu Fig. 1 beschriebenen Aufbau.

Am Einlassstutzen 103 ist eine erste Referenzelektrode 116 in eine Gewindebohrung eingeschraubt. Eine zweite Referenzelektrode 117 ist in eine Gewindebohrung im Auslassstutzen 105 eingeschraubt. Im Bedarfsfall kann im oberen Teil des Gehäuses 102 eine dritte Referenzelektrode 118 in eine weitere Gewindebohrung eingeschraubt sein. Erste, zweite und dritte Referenzelektrode sind in die Bohrungen eingeschraubt und dabei elektrisch leitend mit dem Gehäuse 102 verbunden. Die Referenzelektroden kommen unmittelbar mit dem Fluid im Inneren des Gehäuses 2 in Kontakt, ohne in das Amatureninnere hineinzuragen oder einen Totraum zu bilden.

Der Anschluss des Gehäuses 102, der Referenzelektroden 116, 117 und 118 sowie der Anoden 113 und 114 an eine hier nicht dargestellte Überwachungseinheit erfolgt gemäß den in Fig. 1 und Fig. 2 gezeigten Schaltungsbeispielen.

Die Fig. 4 zeigt die detailierte Darstellung des Auslassstutzens 5 der Förderstrom fördernden Vorrichtung 1 mit dem Rohrelement 12. Zwischen der zweiten Anschlussvorrichtung 8 der Förderstrom fördernden Vorrichtung 1 und der Anschlussvorrichtung 11 des Rohrelements 12 ist die zweite Anode 14 angeordnet. Eine ringförmige und elektrisch isolierend wirkende erste Isolierschiebe 33 ist zwischen der zweiten Anode 14 und der zweiten Anschlussvorrichtung 8 der Förderstrom fördernden Vorrichtung 1 angeordnet. Zwischen der zweiten Anode 14 und der Anschlussvorrichtung 11 des Rohrelements 12 ist eine ringförmige und elektrisch isolierend wirkende zweite Isolierschiebe 34 angeordnet. Der in den Figuren nicht näher bezeichnete Innendurchmesser der Isolierscheiben entspricht den Innendurchmessern d_{A} der Anoden und den Innendurchmessern der Ein- oder Ausströmöffnungen der Förderstrom fördernden Vorrichtung 1. In der zweiten Anschlussvorrichtung 8 sind Bohrungen 35 und in der Anschlussvorrichtung 11 sind Bohrungen 36 vorgesehen. In den Bohrungen 35 bzw. 36 sind elektrisch isolierend wirkende Isolierhülsen 37 eingeschoben. Die Isolierhülsen können ein- oder mehrteilig ausgebildet sein und gegebenenfalls an ihrem freien Ende einen Kragen 38 aufweisen, auf dem ein nicht dargestellter Schraubenkopf bzw. eine Schraubenmutter in Anlage kommen. Optional können auch elektrisch isolierend wirkende separate Ringscheiben verwendet werden. Diese Anordnung von Fremdstomanode, Isolierscheiben und Isolierhülsen ist ebenso für den Einlassstutzen der Förderstrom fördernden Vorrichtung 1 als auch für Ein- und Auslassstutzen der Förderstrom beeinflussenden Vorrichtung 101 vorgesehen.

In der in den Figuren 1 und 2 gezeigten Überwachungseinrichtung 19 wird der für den kathodischen Schutz benötigte Gleichstrom erzeugt, welcher über die Leitung 24 vom ersten Gleichrichter 21 zur Anode 13 und vom zweiten Gleichrichter 22 über die Leitung 25 zur zweiten Anode 14 geführt wird. Die Aufgabe der Überwachungseinrichtung 19 besteht vornehmlich darin, die über die Referenzelektroden 16, 17 und 18 gesendeten Signale hinsichtlich des Potentials innerhalb des Pumpengehäuses mit den voreingestellten Grenzwerten abzugleichen und gegebenenfalls über den an die Anoden 13 und 14 geführten Gleichstrom anzupassen. Dies gilt im gleichen Maß ebenso für die in der Fig. 3 dargestellten Förderstrom beeinflussenden Vorrichtung 101 mit den Anoden 113 und 114 sowie den Referenzelektroden 116, 117 und 118.

**Bezugszeichenliste**

| | | | |
|---|---|---|---|
| 1 | Förderstrom fördernde Vorrichtung, Pumpe | 29 | Leitung |
| 2 | Pumpengehäuse | 30 | Leitung |
| 3 | Einlassstutzen | 31 | Versorgungsleitung |
| 4 | Einströmöffnung | 32 | Alarmsammelleitung |
| 5 | Auslassstutzen | 33 | erste Isolierscheibe |
| 6 | Ausströmöffnung | 34 | zweite Isolierscheibe |
| 7 | erste Anschlussvorrichtung | 35 | Bohrung |
| 8 | zweite Anschlussvorrichtung | 36 | Bohrung |
| 9 | Anschlussmittel | 37 | Isolierhülse |
| 10 | Rohrelement | 38 | Kragen |
| 11 | Anschlussmittel | 101 | Förderstrom beeinflussende Vorrichtung, Armatur |
| 12 | Rohrelement | 102 | Gehäuse |
| 13 | erste Anode | 103 | Einlassstutzen |
| 14 | zweite Anode | 104 | Einströmöffnung |
| 15 | Substrat | 105 | Auslassstutzen |
| 16 | erste Referenzelektrode | 106 | Ausströmöffnung |
| 17 | zweite Referenzelektrode | 107 | erste Anschlussvorrichtung |
| 18 | dritte Referenzelektrode | 108 | zweite Anschlussvorrichtung |
| 19 | Überwachungseinrichtung | 109 | Anschlussvorrichtung |
| 20 | Steuer- oder Regeleinheit | 110 | Rohrelement |
| 21 | erster Gleichrichter | 111 | Anschlussvorrichtung |
| 22 | zweiter Gleichrichter | 112 | Rohrelement |
| 23 | Messmodul | 113 | erste Anode |
| 24 | Leitung | 114 | zweite Anode |
| 25 | Leitung | 115 | Substrat |
| 26 | Leitung | 116 | erste Referenzelektrode |
| 27 | Leitung | 117 | zweite Referenzelektrode |
| 28 | Leitung | 118 | dritte Referenzelektrode |

## Patentansprüche

1. Fluidführendes System mit kathodischem Korrosionsschutz mit wenigstens einer Pumpe (1) und/oder Armatur (101) mit wenigstens einer Anschlussvorrichtung und mit wenigstens einem Rohrelement mit Anschlussmittel,
**dadurch gekennzeichnet,**
**dass** das fluidführende System ringförmige Anoden (13, 14, 113, 114) umfasst, wobei zwischen einer ersten (7, 107) und einer zweiten Anschlussvorrichtung (8, 108) und/oder zwischen einer ersten Anschlussvorrichtung (7, 107) und einem Anschlussmittel (9, 109) und/oder zwischen einer zweiten Anschlussvorrichtung (8, 108) und einem Anschlussmittel (11, 111) jeweils eine Anode (13, 14, 113, 114) angeordnet ist, die Anoden (13, 14, 113, 114) mittels einen oder mehrere Leiter aufweisenden Leitungen (24, 25) mit einer Überwachungseinrichtung (19) elektrisch verbunden sind und der Innendurchmesser (d_{A}) der Anoden (13, 14, 113, 114) gleich dem Innendurchmesser (d_{R}) der an der jeweiligen Anode (13, 14, 113, 114) angeordneten Rohrelements (10, 12, 110, 112) ist.

2. Fluidführendes System nach Anspruch 1, **dadurch gekennzeichnet, dass** der Innendurchmesser (d_{A}) der Anoden (13, 14, 113, 114) dem Innendurchmesser (d_{V}) der der jeweiligen Anode (13, 14, 113, 114) zugeordneten Ein-oder Ausströmöffnung der Pumpe (1) oder Armatur (101) entspricht.

3. Fluidführendes System nach Anspruch 1 oder 2, **dadurch gekennzeichnet, dass** die Pumpe (1) oder Armatur (101) ein Gehäuse (2, 102) aufweist, in dem eine oder mehrere Gewindebohrungen vorgesehen sind, in welche mit dem Gehäuse (2, 102) elektrisch leitend verbundene Referenzelektroden (16, 17, 18, 116, 117, 118) eingeschraubt sind.

4. Fluidführendes System nach einem der Ansprüche 1 bis 3, **dadurch gekennzeichnet, dass** die Referenzelektroden (16, 17, 18, 116, 117, 118) derart zueinander angeordnet sind, dass die größtmögliche Innenfläche des Gehäuses (2, 102) hinsichtlich des Potentials abgleichbar ist.

5. Fluidführendes System nach einem der Ansprüche 1 bis 4, **dadurch gekennzeichnet, dass** die Überwachungseinrichtung (19) eine Steuer- oder Regeleinheit (20), einen ersten Gleichrichter (21), einen zweiten Gleichrichter (22) und ein Messmodul (23) aufweist.

6. Fluidführendes System nach einem der Ansprüche 1 bis 5, **dadurch gekennzeichnet, dass** eine ringförmige und elektrisch isolierend wirkende erste Isolierschiebe (33) zwischen der Anode (13, 14, 113, 114) und der ersten bzw. der zweiten Anschlussvorrichtung (7, 8, 107, 108) sowie eine elektrisch isolierend wirkende zweite Isolierschiebe (34) zwischen der Anode (13, 14, 113, 114) und dem Anschlussmittel (9, 11, 109, 111) angeordnet ist.

7. Fluidführendes System nach einem der Ansprüche 1 bis 6, **dadurch gekennzeichnet, dass** in der ersten und der zweiten Anschlussvorrichtung (7, 8, 107, 108) Bohrungen (35) und im Anschlussmittel (9, 11, 109, 111) Bohrungen (36) vorgesehen sind, in welche elektrisch isolierend wirkende Isolierhülsen (37) angeordnet sind.

8. Fluidführendes System nach Anspruch 7, **dadurch gekennzeichnet, dass** die Isolierhülsen (37) an ihrem freien Ende einen Kragen (38) aufweisen.

## Claims

1. Fluid-conducting system with cathodic corrosion protection, having at least one pump (1) and/or armature (101) having at least one connection device and having at least one pipe element having connection means,
**characterized in that**
the fluid-conducting system comprises annular anodes (13, 14, 113, 114), wherein an anode (13, 14, 113, 114) is arranged in each case between a first (7, 107) and a second connection device (8, 108) and/or between a first connection device (7, 107) and a connection means (9, 109) and/or between a second connection device (8, 108) and a connection means (11, 111), the anodes (13, 14, 113, 114) are electrically connected to a monitoring arrangement (19) by means of lines (24, 25) comprising one or more conductors, and the inner diameter (d_{A}) of the anodes (13, 14, 113, 114) is equal to the inner diameter (d_{R}) of the pipe element (10, 12, 110, 112) arranged on the respective anode (13, 14, 113, 114).

2. Fluid-conducting system according to Claim 1, **characterized in that** the inner diameter (d_{A}) of the anodes (13, 14, 113, 114) corresponds to the inner diameter (d_{V}) of the inflow or outflow opening, assigned to the respective anode (13, 14, 113, 114), of the pump (1) or armature (101).

3. Fluid-conducting system according to Claim 1 or 2, **characterized in that** the pump (1) or armature (101) comprises a casing (2, 102), in which one or more threaded bores are provided, into which reference electrodes (16, 17, 18, 116, 117, 118) electrically conductively connected to the casing (2, 102) are screwed.

4. Fluid-conducting system according to one of Claims 1 to 3, **characterized in that** the reference electrodes (16, 17, 18, 116, 117, 118) are arranged relative to one another in such a way that the greatest possible inner surface of the casing (2, 102) can be balanced in terms of the potential.

5. Fluid-conducting system according to one of Claims 1 to 4, **characterized in that** the monitoring arrangement (19) comprises a control or regulation unit (20), a first rectifier (21), a second rectifier (22), and a measuring module (23).

6. Fluid-conducting system according to one of Claims 1 to 5, **characterized in that** an annular and electrically insulating first insulation washer (33) is arranged between the anode (13, 14, 113, 114) and the first or the second connection device (7, 8, 107, 108) and an electrically insulating second insulation washer (34) is arranged between the anode (13, 14, 113, 114) and the connection means (9, 11, 109, 111).

7. Fluid-conducting system according to one of Claims 1 to 6, **characterized in that** bores (35) are provided in the first and second connection device (7, 8, 107, 108) and bores (36) are provided in the connection means (9, 11, 109, 111), there being electrically insulating insulation sleeves (37) arranged in said bores.

8. Fluid-conducting system according to Claim 7, **characterized in that** the insulation sleeves (37) at their free end have a collar (38).

## Revendications

1. Système de guidage de fluide pourvu d'une protection contre la corrosion cathodique avec au moins une pompe (1) et/ou une armature (101) comportant au moins un dispositif de raccordement et avec au moins un élément de tube avec un moyen de raccordement, **caractérisé en ce que** le système de guidage de fluide comprend des anodes annulaires (13, 14, 113, 114), dans lequel une anode (13, 14, 113, 114) est respectivement disposée entre un premier (7, 107) et un second (8, 108) dispositifs de raccordement et/ou entre un premier dispositif de raccordement (7, 107) et un moyen de raccordement (9, 109) et/ou entre un second dispositif de raccordement (8, 108) et un moyen de raccordement (11, 111), les anodes (13, 14, 113, 114) sont électriquement reliées à un dispositif de surveillance (19) au moyen de lignes (24, 25) présentant plusieurs conducteurs et le diamètre intérieur (d_{A}) des anodes (13, 14, 113, 114) est égal au diamètre intérieur (d_{R}) des éléments de tube (10, 12, 110, 112) disposés à l'anode respective (13, 14, 113, 114).

2. Système de guidage de fluide selon la revendication 1, **caractérisé en ce que** le diamètre intérieur (d_{A}) des anodes (13, 14, 113, 114) correspond au diamètre intérieur (dᵥ) de l'ouverture d'entrée ou de sortie de la pompe (1) ou de l'armature (101) associée à l'anode respective (13, 14, 113, 114).

3. Système de guidage de fluide selon une revendication 1 ou 2, **caractérisé en ce que** la pompe (1) ou l'armature (101) présente un corps (2, 102), dans lequel il est prévu un ou plusieurs trous filetés, dans lesquels sont vissées des électrodes de référence (16, 17, 18, 116, 117, 118) reliées de façon électriquement conductrice au corps (2, 102).

4. Système de guidage de fluide selon l'une quelconque des revendications 1 à 3, **caractérisé en ce que** les électrodes de référence (16, 17, 18, 116, 117, 118) sont disposées l'une par rapport à l'autre de telle manière que la plus grande face intérieure possible du corps (2, 102) puisse être équilibrée en potentiel.

5. Système de guidage de fluide selon l'une quelconque des revendications 1 à 4, **caractérisé en ce que** le dispositif de surveillance (19) présente une unité de commande ou de régulation (20), un premier redresseur (21), un second redresseur (22) et un module de mesure (23) .

6. Système de guidage de fluide selon l'une quelconque des revendications 1 à 5, **caractérisé en ce qu'**un premier disque d'isolation annulaire et électriquement isolant (33) est disposé entre l'anode (13, 14, 113, 114) et le premier ou le second dispositif de raccordement (7, 8, 107, 108) et un second disque d'isolation électriquement isolant (34) est disposé entre l'anode (13, 14, 113, 114) et le moyen de raccordement (9, 11, 109, 111).

7. Système de guidage de fluide selon l'une quelconque des revendications 1 à 6, **caractérisé en ce qu'**il est prévu dans le premier et le second dispositifs de raccordement (7, 8, 107, 108) des trous (35) et dans le moyen de raccordement (9, 11, 109, 111) des trous (36), dans lesquels sont disposées des douilles d'isolation (37) électriquement isolantes.

8. Système de guidage de fluide selon la revendication 7, **caractérisé en ce que** les douilles isolantes (37) présentent un collet (38) à leur extrémité libre.
